Europäisches Patentamt

European Patent Office

Office européen des brevets

(19)

(11) Veröffentlichungsnummer: **0 202 551**
**B1**

(12) **EUROPÄISCHE PATENTSCHRIFT**

(45) Veröffentlichungstag der Patentschrift:
02.05.90

(21) Anmeldenummer: 86106302.2

(22) Anmeldetag: 07.05.86

(51) Int. Cl.⁴: **C03C 1/02**, C01B 33/32

(54) Silikatische Rohstoffe für Keramik, Verfahren zur Herstellung und Verwendung derselben.

(30) Priorität: 22.05.85 DE 3518372

(43) Veröffentlichungstag der Anmeldung:
26.11.86 Patentblatt 86/48

(45) Bekanntmachung des Hinweises auf die Patenterteilung:
02.05.90 Patentblatt 90/18

(84) Benannte Vertragsstaaten:
AT BE CH DE FR GB IT LI LU NL SE

(56) Entgegenhaltungen:
EP-A- 0 015 794
FR-A- 905 004
FR-A- 1 331 271

Die Akte enthält technische Angaben, die nach dem
Eingang der Anmeldung eingereicht wurden und die
nicht in dieser Patentschrift enthalten sind.

(73) Patentinhaber: Zinkweiss-Forschungsgesellschaft mbH,
Halberstädter Strasse 13, D-3380 Goslar(DE)

(72) Erfinder: Lenk, Siegfried, Dipl.-Ing.,
Jean-Paul-Strasse 64, D-8672 Selb(DE)
Erfinder: Ulbrich, Karl-Heinz, Dr. Ing., Halberstädter
Strasse 13, D-3380 Goslar(DE)
Erfinder: Backhaus, Willi, Halberstädter Strasse 13,
D-3380 Goslar(DE)

(74) Vertreter: Werner, Hans-Karsten, Dr. et al,
Deichmannhaus am Hauptbahnhof, D-5000 Köln 1(DE)

## Beschreibung

Gegenstand der vorliegenden Erfindung sind silikatische Rohstoffe für die Keramik, enthaltend Alkalioxid, Zinkoxid und Siliciumdioxid, Verfahren zu ihrer Herstellung und ihre Verwendung.

Die FR-A 1 331 271 beschreibt ein Verfahren zum Herstellen von gebrannten zinkhaltigen Überzügen auf keramischen oder metallischen Formkörpern, wobei neben anderen auch Gemische von $SiO_2$, $ZnO$ und $Na_2CO_3$ im Verhältnis von 2 : 1, 5 : 1 bis 1300°C umgesetzt werden.

Glasuren, gleichgültig, ob Roh- bzw. Spatglasuren oder frittenhaltige Glasuren, sind im allgemeinen Gemische anorganischer Verbindungen, die in bestimmten Mischungsverhältnissen in Form eines Glasurschlickers auf keramische Massen aufgetragen und im Glasurbrand zum glasierten Überzug ausgeschmolzen werden. Glasuren für Einbrenntemperaturen unter 1200° C bestehen meist aus keramischen Fritten und Zusätzen. Die Herstellung dieser Fritten ist bedingt durch den Einsatz wasserlöslicher Rohstoffe wie Alkaliverbindungen, Borverbindungen oder auch Bleiverbindungen, die durch den bei der Herstellung angewendeten Schmelzprozeß in resistente Gläser überführt werden.

Für Glasuren und Fritten, die keramische Gläser bilden, werden insbesondere Oxide verwendet in Verbindung mit Siliciumdioxid. Diese sind $B_2O_3$, $Al_2O_3$, $K_2O$, $Na_2O$, $Li_2O$, $CaO$, $MgO$, $SrO_2$, $BaO$, $ZnO$, $PbO$, $SnO_2$ und $ZrO_2$. Die einzelnen Oxide haben unterschiedliche Aufgaben in der Glasur. $PbO$, $B_2O_3$ und die Alkalien gelten als typische Flußmittel. $SnO_2$ und $ZrO_2$ werden zugesetzt, um der Glasur eine Weißtrübung zu geben.

Die in den Glasuren eingesetzten Fritten werden hergestellt, indem die einzelnen Komponenten in einem Schmelzprozeß zu Mehrstoffsilikaten verschmolzen werden. Diese Schmelzen werden durch Abschreckung in Wasser oder zwischen gekühlten Walzen zur Erstarrung gebracht. Die Abkühlung zwischen Kühlwalzen erfolgt insbesondere bei kontinuierlichen Schmelzprozessen oder bei Fritten mit nicht genügender silikatischer Bindung, besonders bei höheren Anteilen der Verbindungen Natrium, Kalium oder Bor. Der Schmelzprozeß zur Herstellung von Fritten wird entweder periodisch in Schmelzdrehöfen oder in Wannenöfen oder durch kontinuierliches Schmelzen durchgeführt. Bei allen Herstellungsverfahren sind die Schmelzanlagen mit feuerfesten keramischen Werkstoffen ausgekleidet. Um eine ausreichende Fließbarkeit zu erhalten, müssen die Gemische über ihren Schmelzpunkt erhitzt werden. Je nach der Zähigkeit dieser Gläser erfolgt ein Angriff auf die Auskleidung oder Schmelzanlage, der sich als Verschleiß bemerkbar macht und eine häufige Erneuerung der keramischen Auskleidungs-Werkstoffe erforderlich macht. Bei der Abschreckung der flüssigen Schmelze ist ein hoher Wasseraufwand notwendig.

Sofern in Roh- und Spatglasuren oder auch in Fritten Zinkoxid oder Zinkcarbonat eingesetzt wird, treten insbesondere bei reduzierender Brandführung hohe Sublimationsverluste auf. Abgesehen von den unerwünschten Verlusten an Zink, führt die Sublimation zu störenden Ablagerungen im Ofen, die von Zeit zu Zeit und mit erheblichem Arbeitsaufwand wieder entfernt werden müssen. Die Fachwelt hat daher versucht, den Gehalt an Zinkoxid in Glasuren so niedrig wie möglich zu halten oder ganz zu vermeiden, da hierdurch die unerwünschten Folgen der Sublimation reduziert oder vermieden werden.

Die Erfindung hat sich die Aufgabe gestellt, die bisherigen Sublimationsverluste des Zinks weitgehend zu vermeiden. Weiterhin hat sie sich die Aufgabe gestellt, silikatische Rohstoffe für Keramik zu entwickeln, welche preiswert und zuverlässig herstellbar sind, gut verarbeitbar sind, und dabei zu Glasuren führen, die mindestens die Qualität besitzen, die bisherige Glasuren haben.

Diese Aufgabe kann überraschenderweise dadurch gelöst werden, daß Gemische, enthaltend Alkalioxide, Zinkoxid und Siliciumdioxid als durch Kalzinieren gewonnene Dreistoffsilikate mit den Molverhältnissen von 1:1:2 bis 1:2:6 eingesetzt werden. Vorzugsweise liegen die drei Bestandteile Alkalioxid, Zinkoxid und Siliciumoxid in ganzzahligen Molverhältnissen vor. Um sie als Rohstoff für keramische Glasuren, andere silikatische Gläser und keramische Massen einzusetzen, werden sie grob vorgebrochen oder zur Pulverform nachträglich zerkleinert.

Die Herstellung der erfindungsgemäßen silikatischen Rohstoffe für Keramik erfolgt dadurch, daß die Bestandteile Alkalioxid, Zinkoxid und Siliciumdioxid mit den Molverhältnissen von 1:1:2 bis 1:2:6 miteinander vermischt, bei Temperaturen von 900 bis 1000° C zu Dreistoffsilikaten kalziniert, abgekühlt, zerkleinert, ggf. mit anderen entsprechend hergestellten zerkleinerten Dreistoffsilikaten aus Alkalioxid, Zinkoxid und Siliciumdioxid vermischt.

Vorzugsweise liegen die drei Bestandteile des kalzinierten Dreistoffsilikats in ganzzahligen Molverhältnissen vor. Die Bestandteile werden vorzugsweise nach der Mischung granuliert, zu Rohlingen verpreßt und in Durchschuböfen kalziniert. Nach dem Abkühlen können sie in üblicher Weise zerkleinert werden und gewünschtenfalls mit anderen erfindungsgemäßen silikatischen Rohstoffen oder sonstigen Bestandteilen für keramische Glasuren oder keramische Massen vermischt und weiterverarbeitet werden.

Die erfindungsgemäßen silikatischen Rohstoffe für Keramik und das Verfahren zu ihrer Herstellung weisen eine Reihe von nicht vorhersehbaren Vorteilen auf.

Während die Herstellung von Fritten in Abhängigkeit von ihrer Zusammensetzung bei Temperaturen zwischen 1000 und 1400° C erfolgt, wobei der Fritte-Versatz voll ausgeschmolzen und dann rasch abgekühlt werden muß, entstehen die erfindungsgemäßen Dreistoffsilikate bereits durch Kalzinieren bei Temperaturen von 900 bis 1000° C. Vorzugsweise betragen die Kalzinierungstemperaturen 920 bis 960° C. Die Temperaturen werden so gewählt, daß die Komponenten beim Kalzinieren zu einer schaumigen Glasmasse sintern, ohne dabei voll auszuschmelzen. Die so entstehenden durch Kalzinieren gewonnenen Dreistoffsilikate können ohne besondere Schwierigkeiten zerkleinert und gemahlen werden. Die entstehenden Pulver können direkt mit Wasser zu einem Glasurschlicker angerührt werden. Gegebenenfalls können aber auch mehrere verschiedene dieser Dreistoffsilikate miteinander vermischt werden, da sie beim Glasurbrand unbeschränkt miteinander mischbar sind. Gewünschtenfalls werden den Gemischen auch die sonstigen üblichen Glasurbestandteile zugemischt. Zu diesen zählen Farbpigmente, sonstige Stoffe wie Kaolin, Ton, Kalkspat, Feldspat usw. oder auch gewisse Mengen der bisher eingesetzten Fritten.

Die erfindungsgemäßen silikatischen Rohstoffe erweichen zwischen 820 bis 900° C je nach dem molaren Anteil von $SiO_2$. Der Viskositätsabbau (Fließbeginn) liegt zwischen 950 und 1040° C. Die neuen, mit diesen Dreistoffsilikaten hergestellten Glasuren können daher im Gesamtbereich der keramischen Glasuren mit Glasureinbrenntemperaturen über 1050° C eingesetzt werden.

Im Gegensatz zu den bisher bekannten Glasuren auf Basis von Zinkoxid oder Zinkcarbonat weisen die Glasuren auf Basis der erfindungsgemäßen silikatischen Rohstoffe praktisch keine Sublimationsverluste mehr auf. Die Zinkverluste sind selbst beim reduzierenden Brand überraschend gering.

Da die Herstellung der Dreistoffsilikate ohne Ausschmelzen bei Temperaturen unter 1000° C erfolgt, findet praktisch kein Kontakt zwischen dem Dreistoffgemischen und der Auskleidung der Öfen statt, so daß es weder zu Verunreinigungen durch Verschleiß der Ofenauskleidungsmaterialien noch zu Verlusten des durch Kalzinieren gewonnenen Produkts kommt. Da die zur Silikatbildung notwendigen Kalzinierungstemperaturen um 100 bis 200° C niedriger liegen als die bisher notwendigen Schmelztemperaturen bei der Herstellung von keramischen Fritten, werden auch erhebliche Energiemengen eingespart.

Sofern die Mischung der drei Ausgangskomponenten Alkalioxid, Zinkoxid und Siliciumdioxid granuliert und zu Rohlingen verpreßt werden, sind diese in Durchschuböfen über und nebeneinander stapelfähig.

Ein weiterer überraschender Vorteil der erfindungsgemäßen silikatischen Rohstoffe besteht darin, daß bei bestimmten Molanteilen das Siliciumdioxid das Zinkoxid in der Glasphase teilweise wieder rekristallisiert und dadurch eine weißgetrübte glänzende Glasur liefert. Es werden daher erfindungsgemäß keine Zusätze wie Zinndioxid oder Zirkondioxid mehr benötigt. Weiterhin kann auf Flußmittel wie Blei- und Borverbindungen völlig verzichtet werden. Auch bei diesen silikatischen Rohstoffen mit relativ hohem Zinkoxidgehalt, ist der Verlust durch Sublimation des Zinks ungewöhnlich gering.

Überraschenderweise ist eine aus dem erfindungsgemäßen silikatischen Rohstoff hergestellte Glasur nicht leichtflüssig, sondern zeigt einen verhaltenen Verlauf und ein größeres Erweichungsintervall. Es ist ohne weiteres möglich, eine Mattglasur, eine transparente Hochglanzglasur oder eine weißgetrübte Glasur zu fertigen, und das ohne den Zusatz von üblichen Weißtrübungsmitteln. Die günstigen Eigenschaften der neuen silikatischen Rohstoffe ermöglichen erhebliche Zeiteinsparungen. Sie können im Schnellbrand auf den Scherben aufgebracht werden, ohne Rücksicht darauf, ob in oxidierender, reduzierender oder neutraler Atmosphäre gebrannt wird. Glasuren, hergestellt mit diesen Dreistoffsilikaten, enthalten keine Bleiverbindungen und entsprechen somit den strengen Vorschriften über die Abgabe von gesundheitsschädlichen Stoffen, wie Blei gemäß DIN 51 031 und DIN 51 032.

Überraschenderweise hat sich weiterhin herausgestellt, daß die erfindungsgemäßen silikatischen Rohstoffe auch geeignet sind, zu keramischen Massen zugesetzt zu werden.

Sie können hierbei anstelle von Feldspat, Calcium- oder Magnesiumsilikaten eingesetzt werden und bewirken, daß die Sintertemperaturen erheblich herabgesetzt werden. Bei einer Hartporzellanmasse, die normalerweise bei 1380 bis 1400° C gebrannt wird, läßt sich durch Zusatz des erfindungsgemäßen silikatischen Rohstoffes anstelle von Feldspat die Brenntemperatur auf 1200 bis 1250° C senken. Bei Ersatz von zwei Drittel des Feldspates durch die erfindungsgemäßen Dreistoffsilikate sintert das Produkt bereits bei 1250° C dicht. Ein weiterer Vorteil der erfindungsgemäßen silikatischen Rohstoffe beim Einsatz in keramischen Massen besteht darin, daß diese Silikate bezüglich der Zusammensetzung wesentlich leichter konstant gehalten werden können und daher die Schwankungen wie bei Verwendung von natürlichen Mineralien vermieden werden.

Beim Zusatz der erfindungsgemäßen silikatischen Rohstoffe zu keramischen Massen werden die Eigenschaften der Scherben günstig beeinflußt durch Herabsetzen der Brenntemperatur, Verbesserung des Ausdehnungskoeffizienten, Erniedrigung der Brennzeiten, höhere mechanische Festigkeit bei niedriger Brenntemperatur und bessere Haftung der Glasuren.

Vorzugsweise werden die drei Komponenten des erfindungsgemäßen silikatischen Rohstoffes in ganzzahligen Molverhältnissen eingesetzt. Dies führt zu besonders geringer Wasserempfindlichkeit und besonders niedrigen Schmelztemperaturen. Bei Überschuß von Alkali erhöht sich die Wasserlöslichkeit und bei einem überschuß der Komponenten Zinkoxid und insbesondere Siliciumdioxid erhöht sich die Erweichungstemperatur. Die Abweichungen von den ganzzahligen Molverhältnissen sollten daher in der Praxis so gering wie möglich gehalten werden.

In den nachfolgenden Beispielen sind einige typische und bevorzugte Zusammensetzungen des erfindungsgemäßen silikatischen Rohstoffes für Keramik beschrieben.

Beispiel 1

Ein silikatischer Rohstoff für Keramik, bestehend aus den drei Bestandteilen Alkalioxid, Zinkoxid und Siliciumdioxid, besteht aus 1 Mol $K_2O$, 2 Mol ZnO und 4 Mol $SiO_2$. Die drei Komponenten werden homogen miteinander vermischt und zu Briketts komprimiert. Die Briketts werden im Durchschubofen bei ca. 950° C gesintert, abgekühlt und gemahlen. Das Mahlgut wird mit Wasser und ggf. sonstigen üblichen Bestandteilen zu einem Glasurschlikker verarbeitet und bei 1050° C gebrannt. Die Glasur entspricht qualitativ hochwertigen Glasuren.

### Beispiel 2

In analoger Weise wie in Beispiel 1 werden 1 Mol $Na_2O$, 2 Mol ZnO und 6 Mol $SiO_2$ verarbeitet. Auch dieses Produkt liefert ausgezeichnete Glasuren und ist als Bestandteil von keramischen Massen geeignet.

### Beispiel 3

36 Gew.-% des gemäß Beispiel 2 hergestellten keramischen Rohstoffes werden mit 18 Gew.-% Kalkspat, 12 Gew.-% Dolomit, 8 Gew.-% Kaolin und 26 Gew.-% Quarz zu einem Glasurversatz gemischt. Bei Brenntemperaturen von 1200 bis 1250° C entstehen weißgefärbte Glasuren.

### Beispiel 4

50 Gew.-% des Dreistoffsilikats gemäß Beispiel 1 im Molverhältnis 1:2:4 werden mit 15 Gew.-% Kalkspat, 7 Gew.-% Dolomit, 5 Gew.-% Kaolin und 23 Gew.-% Quarz zu einem Glasurschlicker verarbeitet. Bei Brenntemperaturen zwischen 1160 und 1200° C entsteht eine transparente Glasur.

## Patentansprüche

1. Silikatischer Rohstoff für Keramik, enthaltend Alkalioxide, Zinkoxid und Siliciumdioxid, dadurch gekennzeichnet, daß die drei Bestandteile Alkalioxid, Zinkoxid und Siliciumdioxid als durch Kalzinieren gewonnene Dreistoffsilikate mit den Molverhältnissen von 1:1:2 bis 1:2:6 vorliegen.

2. Silikatischer Rohstoff gemäß Anspruch 1, dadurch gekennzeichnet, daß die Dreistoffsilikate in ganzzahligen Molverhältnissen vorliegen.

3. Silikatischer Rohstoff gemäß Anspruch 1 oder 2, dadurch gekennzeichnet, daß die Dreistoffsilikate als kalzinierte, nachzerkleinerte Pulver vorliegen.

4. Verfahren zur Herstellung von silikatischen Rohstoffen für Keramik, enthaltend Alkalioxide, Zinkoxid und Siliciumdioxid, dadurch gekennzeichnet, daß die Bestandteile Alkalioxid, Zinkoxid und Siliciumdioxid mit den Molverhältnissen von 1:1:2 bis 1:2:6 miteinander vermischt, bei Temperaturen von 900 bis 1000° C zu Dreistoffsilikaten kalziniert, abgekühlt, zerkleinert, ggf. mit anderen entsprechend hergestellten zerkleinerten Dreistoffsilikaten aus Alkalioxid, Zinkoxid und Siliciumdioxid vermischt werden.

5. Verfahren gemäß Anspruch 4, dadurch gekennzeichnet, daß die Dreistoffsilikate in ganzzahligen Molverhältnissen vorliegen.

6. Verfahren gemäß Anspruch 4 oder 5, dadurch gekennzeichnet, daß die Bestandteile nach der Mischung granuliert, zu Rohlingen verpreßt, in Durchschuböfen kalziniert werden.

7. Verwendung von durch Kalzinieren gewonnenen Dreistoffsilikaten, enthaltend Alkalioxid, Zinkoxid und Siliciumdioxid in Molverhältnissen von 1:1:2 bis 1:2:6 als silikatischer Rohstoff für keramische Glasuren sowie keramische Massen in Kombination mit anderen üblichen Mischungsbestandteilen und sonstigen technischen silikatischen Gläsern.

## Claims

1. A silicatic raw material for ceramics, containing alkali metal oxides, zinc oxide and silicon dioxide, characterized in that the three components alkali metal oxide, zinc oxide and silicon dioxide are present as ternary silicates produced by calcination and having a molar ratio of from 1:1:2 to 1:2:6.

2. The silicatic raw material according to claim 1, characterized in that the ternary silicates are present in integral molar ratios.

3. The silicatic raw material according to claims 1 or 2, characterized in that the ternary silicates are present as calcined subsequently comminuted powders.

4. A process for producing silicatic raw materials for ceramics, containing alkali metal oxides, zinc oxide and silicon dioxide, characterized in that the components alkali metal oxide, zinc oxide and silicon dioxide are mixed in molar ratios of from 1:1:2 to 1:2:6, calcined at temperatures of from 900 °C to 1000 °C to form ternary, cooled, comminuted and are optionally mixed with other ternary silicates comprising alkali metal oxide, zinc oxide and silicon dioxide and having been produced accordingly.

5. The process according to claim 4, characterized in that the ternary silicates are present in integral molar ratios.

6. The process according to claim 4 or 5, characterized in that the components once mixed are granulated, compressed to form green compacts and calcined in pushed bat kilns.

7. Use of ternary silicates produced by calcination, containing alkali metal oxides, zinc oxide and silicon dioxide in molar ratios of from 1:1:2 to 1:2:6 as a silicatic raw material for ceramic glazes and ceramic compositions in combination with other conventional mix components and other technical silicate glasses.

## Revendications

1. Matière première silicatée pour céramiques comprenant des oxydes de métal alcalin, de l'oxyde de zinc et du dioxyde de silicium, caractérisée en ce que les trois composants: oxyde de métal alcalin, oxyde de zinc et dioxyde de silicium, se présentent sous forme de silicates à trois constituants obtenus par calcination et ayant des rapports molaires de 1:1:2 à 1:2:6.

2. Matière première silicatée selon la revendication 1, caractérisée en ce que les silicates à trois constituants se présentent avec des rapports molaires à nombres entiers.

3. Matière première silicatée à trois constituants, caractérisée en ce que les silicates à trois constituants se présentent sous forme de poudre calcinée et broyée.

4. Procédé de fabrication de matières premières silicatées pour céramiques contenant des oxydes de métal alcalin, de l'oxyde de zinc et du dioxyde de silicium, caractérisé en ce que les composants oxyde de métal alcalin, oxyde de zinc et dioxyde de silicium sont mélangés entre eux avec des rapports molaires de 1:1:2 à 1:2:6, puis calcinés à des températures de 900 à 1000°C sous forme de silicates à trois constituants, refroidis, réduits et, le cas échéant, mélangés avec d'autres silicates à trois constituants d'oxyde de métal alcalin, d'oxyde de zinc et de dioxyde de silicium obtenus de manière appropriée et réduits.

5. Procédé selon la revendication 4, caractérisé en ce que les silicates à trois composants se présentent avec des rapports molaires à nombres entiers.

6. Procédé selon la revendication 4 ou 5, caractérisé en ce que les composants sont granulés après le mélange, comprimés en lopins et calcinés dans des fours passants.

7. Utilisation de silicates à trois composants contenant de l'oxyde de métal alcalin, de l'oxyde de zinc et du dioxyde de silicium avec des rapports molaires de 1:1:2 à 1:2:6, comme matière première silicatée pour des glaçures céramiques et des pâtes céramiques, en combinaison avec d'autres composants de mélange habituels et d'autres verres techniques silicatés.